# EUROPÄISCHE PATENTANMELDUNG

(11) **EP 3 401 650 A1**
(43) Veröffentlichungstag der Anmeldung: **14.11.2018**
(21) Anmeldenummer: 18000346.9
(22) Anmeldetag: 11.04.2018
(51) Int. Cl.: G01F 15/06, G01D 5/00, G01F 1/66, G01F 15/00, G01F 15/18, G01F 25/00

(54) **FLUIDZÄHLER-ANORDNUNG ZUM EINBAU IN EIN FLUIDLEITUNGSNETZ**

(30) Priorität: 09.05.2017 DE 102017004450
(71) Anmelder: Diehl Metering GmbH, 91522 Ansbach (DE); Diehl Metering S.A.S., 68300 Saint-Louis (FR)
(72) Erfinder: Ross, Benjamin, DE - 57392 Schmallenberg (DE); Neidinger, Jan, DE - 77731 Willstätt (DE); Schlegel, Oliver, DE - 71711 Murr (DE); Fischer, Benjamin, DE - 76307 Karlsbad (DE); Schimetzki, Michael, DE - 76137 Karlsruhe (DE); Chinh-Duc, Nguyen, DE - 75177 Pforzheim (DE)
(74) Vertreter: Diehl Patentabteilung

(57) **Zusammenfassung**

Anordnung (1) zum Einbau in ein Fluidleitungsnetz, umfassend einen Fluidzähler (2), mit einem Gehäuse (3) mit einem Fluideinlass (4) und einem Fluidauslass (5), einem Volumenmessteil (6), sowie mindestens einem Anschlussstück (20), welches für den Anschluss an das Gehäuse (3) des Fluidzählers (2) vorgesehen ist und entweder mit einer Zusatzfunktion ausgestattet ist oder für die Adaption einer Zusatzfunktion am Anschlussstück (20) hergerichtet ist, wobei das Anschlussstück (20) einen Anschlussstückzulauf (22) sowie Anschlussstückablauf (23) aufweist und der Fluidzähler (2) sowie das Anschlussstück (20) eine modulare Einheit bilden, welche in das Fluidleitungsnetz installierbar ist.

## Beschreibung

Die vorliegende Erfindung betrifft eine Anordnung zum Einbau in ein Fluidleitungsnetz gemäß dem Oberbegriff des Anspruchs 1, ein Anschlussstück für die erfindungsgemäße Anordnung sowie einen Fluidzähler.

### Technologischer Hintergrund

Gattungsgemäße Fluidzähler sind in der Regel innerhalb eines Versorgungsnetzes befindliche Verbrauchsmessgeräte, z. B. für Wärme, Gas oder Wasser, die dem jeweiligen Anschlussbenutzer den tatsächlichen Verbrauch anzeigen. Ferner können derartige Verbrauchsmessgeräte in ein Kommunikationsnetz eingebunden sein. Hierbei können sie dazu hergerichtet sein, den Verbrauch an eine übergeordnete Einheit, wie z. B. einen Datensammler oder die Schaltzentrale des Versorgers zu übertragen. Derartig kommunizierende Verbrauchsmessgeräte werden auch als "Intelligente Verbrauchsmessgeräte" oder "Smart Meter" bezeichnet. Durch den Einsatz von Intelligenten Verbrauchsmessgeräten entfallen manuelle Ablesungen der Zählerstände und es können seitens des Versorgers kurzfristigere Rechnungstellungen gemäß dem tatsächlichen Verbrauch vorgenommen werden. Durch kurzfristigere Ableseintervalle ist wiederum eine genauere Kopplung der Endkundentarife an die Entwicklung der Börsenstrompreise möglich. Auch können Versorgungsnetze wesentlich besser ausgelastet werden.

Die Durchflussmenge bzw. der Fluidverbrauch kann bei gattungsgemäßen Fluidzählern z. B. durch mechanische, Ultraschall- oder magnetisch-induktive Messverfahren ermittelt werden. Zudem können auch zusätzliche Messparameter, wie z. B. die Temperatur des Fluids erfasst werden. Handelt es sich beispielsweise bei dem Fluidzähler um einen Wasserzähler, so stellt der Wasserzähler zwangsläufig einen Teil der Trinkwasser-Installation dar. In der Verordnung über die Qualität von Wasser für den menschlichen Gebrauch (TrinkwV) ist z. B. geregelt, dass chemische und mikrobielle Kontaminationen sowie unerwünschte Ablagerungen in Trinkwasser-Installationen vermieden werden müssen. Dementsprechend wichtig ist dabei die Überwachung der betreffenden allgemeinen, chemischen sowie mikrobiologischen Parameter zur Untersuchung von Trinkwasser. Diese Parameter werden heutzutage in der Regel durch Beprobung und anschließender Laboruntersuchung oder anhand von im Gelände durchgeführter Schnelltests ermittelt.

### Druckschriftlicher Stand der Technik

Die DE 10 2012 009 076 A1 beschreibt einen außen an eine Rohrleitung montierbaren ("Clamp-on") Fluidzähler, bei dem zusätzliche Einheiten mit einer Zusatzfunktion vorgesehen sind, wie z. B. eine Messeinheit zur Erfassung physikalischer, chemischer oder biologischer Eigenschaften des Fluids, eine Auswerteeinheit zur Auswertung der erfassten Daten oder eine Kommunikationseinheit zur Datenübertragung. Die Einheiten sind hierbei als ein oder mehrere Einzelmodule (Funktionseinheiten) ausgebildet, wobei jedes Einzelmodul mit dem Fluidzähler mechanisch verbindbar ist. Die Einzelmodule sowie der Fluidzähler werden dabei auf die Rohrleitung montiert, so dass kein direkter Kontakt mit dem durchströmenden Fluid erfolgt. Dementsprechend können somit auch nur Parameter durch die Einzelmodule erfasst werden, die aufgrund ihrer Funktion keinen Fluidkontakt benötigen.

Aus der DE 20 2015 101 027 U1 ist ein Anschlussstück zum Einbau in eine Rohr- bzw. Wasserleitung sowie eine aus mehreren Anschlussstücken bestehende Anschlussanordnung bekannt. Das Anschlussstück besitzt einen Zulauf und einen Ablauf, die einander gegenüberliegend entlang einer Achse angeordnet sind. Mittels des Zulaufs und des Ablaufs wird das Anschlussstück in die Rohrleitung eingesetzt. Über ober- und unterseitig angeordnete Flansche können Funktionseinheiten, sogenannte Wasserbehandlungsgeräte, wie z. B. Wasserenthärter oder Wasserfilter, an das Anschlussstück angeschlossen werden. Das jeweilige Anschlussstück ist hierbei derart aufgebaut, dass das Wasser zunächst das Anschlussstück und anschließend vom Anschlussstück aus die Wasserbehandlungsgeräte durchströmt. Dadurch wird gewährleistet, dass Wasser beide Wasserbehandlungsgeräte beim Durchfließen des Anschlussstücks passiert, jedoch kann kein Wasserdurchfluss erfolgen, sobald eines der Wasserbehandlungsgeräte ausgebaut oder defekt ist. Bei einem Ausbau oder Defekt muss daher der Wasserfluss abgeriegelt werden.

### Aufgabe der vorliegenden Erfindung

Die Aufgabe der vorliegenden Erfindung besteht darin, eine Anordnung sowie einen gattungsgemäßen Fluidzähler zur Verfügung zu stellen, bei dem Zusatzfunktionen in einfacher Weise, schnell und wartungsarm adaptiert werden können.

### Lösung der Aufgabe

Die vorstehende Aufgabe wird durch die gesamte Lehre des Anspruchs 1 sowie den nebengeordneten Ansprüchen gelöst. Zweckmäßige Ausgestaltungen der Erfindung sind in den Unteransprüchen beansprucht.

Erfindungsgemäß weist das Anschlussstück einen eigenen Anschlussstückzulauf sowie Anschlussstückablauf auf. Dadurch kann Fluid durch das Anschlussstück geführt werden. Der Anschlussstückzulauf und der Anschlussstückablauf können hierzu direkt über einen Durchlaufkanal innerhalb des Anschlussstücks miteinander verbunden sein. Daraus resultiert der Vorteil, dass eine auf Fluidkontakt basierende Messung und/oder Behandlung in dem erfindungsgemäßen Anschlussstück erfolgen kann. Zudem bilden der Fluidzähler sowie das Anschlussstück eine modulare Einheit, welche in das Fluidleitungsnetz installierbar ist. Die Auswahl und Installation der Zusatzfunktion kann werkseitig aber ebenso gut auch vor Ort erfolgen. Hierdurch wird das Hinzufügen und Entfernen einer Zusatzfunktion erleichtert und beschleunigt. Der Nachrüstvorgang bestehender Geräte wird erheblich vereinfacht. Durch die erfindungsgemäße Anordnung wird ein Baukastensystem realisiert, mittels dem bestehende und/oder zusätzliche Funktionen in einfacher Weise in einem Fluidkreislauf implementierbar sind.

Zweckmäßigerweise können mehrere Anschlussstücke miteinander eine modulare Einheit bilden, sodass der Fluidzähler sowie die mehreren Anschlussstücke eine modulare Einheit bilden, welche in das Fluidleitungsnetz installierbar ist. Dadurch wird die Installation erheblich erleichtert, indem die modulare Einheit werksseitig gemäß der vorliegenden Wunschkonfiguration vorkonfektioniert werden kann. Anschließend kann die modulare Einheit in einem Einbauschritt in das Fluidleitungsnetz installiert werden. Die Anschlussstücke können hierbei in Durchflussrichtung des Mediums vor und/oder nach dem Fluidzähler bzw. dessen Volumenmessteil angeordnet sein. Die Anzahl der Anschlussstücke ist variabel und kann individuell an die Einbausituation vor Ort bzw. die Bedürfnisse des Betreibers angepasst werden. Dadurch, dass mehrere modulare Anschlussstücke vorgesehen sind, die entweder mit einer Zusatzfunktion ausgestattet oder zumindest für die Adaption einer Zusatzfunktion am Anschlussstück hergerichtet sind, können beliebig viele Zusatzfunktionen adaptiert werden.

Vorzugsweise ist das jeweilige Anschlussstück wiederum mit einem Funktionsmodul verbindbar. Das Funktionsmodul ist in einem eigenen Gehäuse untergebracht. Unterschiedliche Funktionsmodule können somit in einfacher Weise über die Anschlussvorrichtung installiert oder gewechselt werden.

Gemäß einer bevorzugten Ausgestaltung kann eine Steckverbindung zwischen dem Fluidzähler und dem Anschlussstück und/oder eine Steckverbindung zwischen dem Anschlussstück und dem Funktionsmodul und/oder eine Steckverbindung zwischen dem Fluidzähler und dem Funktionsmodul vorgesehen sein. Die Steckverbindung kann derart ausgebildet sein, dass diese im Wesentlichen nicht falsch montierbar bzw. zusammensteckbar ist. Hierdurch wird auf einfache Weise eine bevorzugte Orientierung der Funktionsmodule durch die Montage erreicht. Zudem wird kein Werkzeug für die Montage des Fluidzählers, der Anschlussstücke und/oder der Funktionsmodule zu der modularen Einheit benötigt.

Die konkrete Funktion kann durch Auswahl des geeigneten Funktionsmoduls festgelegt werden. Beispielsweise kann es sich bei dem Funktionsmodul um ein Entkalker-Funktionsmodul, ein Filter-Funktionsmodul, ein Überwachungs-Funktionsmodul z. B. zur Überwachung der Messgenauigkeit des Fluidzählers, ein Keimreduzierungs-Funktionsmodul, ein Druckminderungs- und/oder Druckregulierungs-Funktionsmodul, ein Funktionsmodul zur Bestimmung chemischer und/oder mikrobiologischer Parameter, ein Energie-Funktionsmodul z. B. zur Bereitstellung einer zusätzlichen Energiequelle, ein Daten-Funktionsmodul z. B. zum Speichern der Daten, ein Kommunikations-Funktionsmodul z. B. zur Funk-übertragung der angefallenen Daten, ein Funktionsmodul zur Leckageerkennung, ein Anzeige-Funktionsmodul z. B. zur Parameteranzeige an der Anordnung und/oder ein Funktionsmodul zur Bestimmung von pH-Wert, elektrische Leitfähigkeit, Nitrat, Nitrit, Sulfat, Kohlenstoffdioxid, Eisen, Fluorid, Chlor, Kupfer, Phosphat, Silizium, Ammonium, Härte, Temperatur, Karbonat, Salzgehalt, Keimanteil und/oder Metallanteil handeln. Dementsprechend ergeben sich vielfältigste Zusatzfunktionen, die dem Fluidzähler in einfacher Weise zugeordnet werden können. Zudem können bestehende Systeme in einfacher Weise mit derartigen Zusatzfunktionen nachgerüstet werden.

Bei dem Fluidzähler, dem Anschlussstück und/oder dem Funktionsmodul kann mindestens ein, vorzugsweise eine Mehrzahl von Absperrventilen zum Absperren und/oder Regeln des Durchflusses vorgesehen sein. Bei den Absperrventilen handelt es sich insbesondere um automatische, mediumbetätigte (z. B. pneumatisch oder hydraulisch), manuelle oder elektrische (z. B. elektromotorisch oder elektromagnetisch) Ventile.

Ferner kann das Anschlussstück einen vorzugsweise zuschaltbaren Abzweigungskanal aufweisen, der z. B. mit dem Durchlaufkanal zwischen Anschlussstückzulauf und Anschlussstückablauf verbunden ist. Der Abzweigungskanal kann einteilig oder mehrteilig, d. h. als Bypass-Kanal mit Hin- und Rückführung, durch das Anschlussstück verlaufen.

Zweckmäßigerweise kann das Funktionsmodul an den Abzweigungskanal über eine Kanalschnittstelle angeschlossen werden. Hierbei kann das Funktionsmodul, je nachdem, ob der Abzweigungskanal einteilig oder als Bypass ausgebildet ist, derart hergerichtet sein, dass dieses lediglich (stehenden) Fluidkontakt (z. B. bei einteiliger Ausbildung) ermöglicht oder über einen Fluideingang und einen Fluidausgang am Funktionsmodul von Fluid durchströmt wird (z. B. im Bypass). Zweckmäßigerweise kann die modulare Einheit bestehend aus Anschlussstücken sowie dem Fluidzähler entlang einer gemeinsamen Achse verlaufend ausgerichtet sein. Beispielsweise können die Anschlussstücke sowie der Fluidzähler entlang einer Durchströmungsachse des Mediums angeordnet werden. Dies ermöglicht eine langgestreckte Form der Anordnung, die einen Fluideinlass und einen in gleicher Flucht befindlichen Fluidauslass umfasst, wodurch der Fluidzähler in besonders einfacher Weise in ein Fluidleitungsnetz installierbar ist.

Ferner kann ein Kommunikationsmodul vorgesehen sein, welches z. B. am Gehäuse des Fluidzählers angeordnet ist. Das Kommunikationsmodul dient beispielsweise dazu, die vom Fluidzähler, den Funktionsmodulen und/oder den Anschlussstücken ermittelten Daten zu sammeln und zu speichern. Zudem kann das Kommunikationsmodul mindestens eine Sende- und Empfangseinheit sowie eine Antenne umfassen, mittels derer eine drahtlose Kommunikation z. B. zur Datenübertragung mit einem übergeordneten Datensammler, der Schaltzentrale des Versorgers (z. B. Verbrauchsdatenübertragung an einen Datensammler), einem Smart-Home-System oder einem Netzwerk aus Fluidzählern oder deren Funktionsmodulen, z. B. über Funk oder Mobilfunk, stattfinden kann.

Vorzugsweise können die Absperrventile einen automatischen Absperrmechanismus aufweisen. Beispielsweise kann der Absperrmechanismus an ein bestimmtes Abschaltsignal gekoppelt werden, welches z. B. vom Kommunikationsmodul empfangen wird. Daraus resultiert der Vorteil, dass zusätzliche Funktionen durchgeführt werden können. Beispielsweise kann der Fluidfluss im Notfall (z. B. bei einer Leckage) automatisch oder per Fernwartung abgeschaltet werden. Zudem kann bei Entnahme eines Funktionsmoduls die Abschaltung des Durchflusses durch den Bypass und/oder das Freischalten des Durchflusses beim Einstecken des Funktionsmoduls automatisch erfolgen, indem Absperrventile im Funktionsmodul und/oder im Anschlussstück durch das Einstecken bzw. die Entnahme der Funktionsmodule gesteuert werden. Dadurch wird gewährleistet, dass die Funktionsmodule in einfacher Weise vom Anwender ohne Servicepersonal sicher installiert bzw. deinstalliert werden können. Die Handhabung sowie die Sicherheit der Anordnung werden dadurch zusätzlich verbessert.

Zweckmäßigerweise können eine Datenleitung sowie mindestens eine Datenschnittstelle am Fluidzähler und/oder am Anschlussstück und/oder am Funktionsmodul vorgesehen sein. Dadurch können die von dem Fluidzähler und/oder den einzelnen Funktionsmodulen generierten Daten über eine aus mehreren einzelnen Datenleitungen bestehende gemeinsame modulartig zusammengefügte Datenleitung innerhalb der Anordnung, z. B. zum Kommunikationsmodul hin, übertragen werden.

Zusätzlich kann eine Energiequelle, wie z. B. eine Batterie, ein Akkumulator oder ein Netzteil mit einer Strom-Einspeiseleitung, und/oder eine Energieleitung und/oder mindestens eine Energieschnittstelle am Fluidzähler und/oder am Anschlussstück und/oder am Funktionsmodul vorgesehen sein. Durch die Energieschnittstelle können die modularen Einheiten untereinander verbunden werden, sodass sich diese wahlweise untereinander mit Energie versorgen können oder energetisch autark arbeiten. Beispielsweise kann auch ein zusätzliches Energie-Funktionsmodul vorgesehen sein, welches turnusmäßig oder bei Bedarf gewechselt werden kann, um die Energieversorgung zu gewährleisten. Dadurch wird die Haltbarkeit der Funktionsmodule sowie des Fluidzählers in besonderem Maße verbessert.

Gemäß einer alternativen Ausgestaltung der vorliegenden Erfindung kann das Anschlussstück oder auch mehrere Anschlussstücke integraler Bestandteil des Gehäuses des Fluidzählers sein, sodass ein gemeinsames Gehäuse vorgesehen ist, welches die Bauteilkomponenten des Fluidzählers sowie die Anschlussstücke im Wesentlichen umgibt.

Zweckmäßigerweise kann das Gehäuse dabei mindestens eine Aufnahmevorrichtung umfassen, die jeweils z. B. einem Anschlussstück zugeordnet ist, wobei die Aufnahmevorrichtung dazu hergerichtet ist, das Funktionsmodul aufzunehmen. Die Funktionsmodule können hierbei in einfacher Weise in die Aufnahmevorrichtung eingeschoben bzw. eingesteckt werden. Die Handhabung der Funktionsmodule wird dadurch besonders vereinfacht.

Vorzugsweise ist innerhalb der Aufnahmevorrichtung eine Anschlussvorrichtung zum Anschluss des Funktionsmoduls vorgesehen. Insbesondere kann die Anschlussvorrichtung eine Steckverbindung umfassen, in die das Funktionsmodul mit einer entsprechenden Anschlussvorrichtung eingesteckt werden kann. Hierbei können eine Energieschnittstelle und/oder eine Datenschnittstelle im Bereich der Anschlussvorrichtung vorgesehen sein, die mit dem Einsteckvorgang automatisch z. B. eine Daten- und/oder Energieschnittstelle des Funktionsmoduls kontaktiert bzw. sich mit dieser verbindet.

Praktischerweise kann das Volumenmessteil als Einschubmodul mit eigenem Gehäuse ausgebildet sein, welches in das Gehäuse des Fluidzählers bzw. die Aufnahmevorrichtung eingebracht bzw. eingesteckt oder eingeschoben werden kann. Das Volumenmessteil stellt somit ebenfalls ein Funktionsmodul dar, welches bei Bedarf, z. B. im Falle eines Defekts, in einfacher Weise, vorzugsweise werkzeuglos durch den Anwender ausgewechselt werden kann. Daraus resultiert der Vorteil, dass durch Wartungsarbeiten anfallende Kosten und Zeit eingespart werden.

Ferner kann eine automatische Daten- und/oder Energieverbindung des Funktionsmoduls mit einem anderen Funktionsmodul, einem Anschlussstück, dem Fluidzähler und/oder dem Kommunikationsmodul über die Daten- und/oder Energieschnittstelle erfolgen, sobald das Funktionsmodul an das Anschlussstück angeschlossen wird. Die Daten- und/oder Energieverbindung kann hierbei drahtgebunden oder drahtlos erfolgen.

Nebengeordnet beansprucht die vorliegende Erfindung ein Anschlussstück, insbesondere für eine erfindungsgemäße Anordnung, welches ein Anschlussstückgehäuse, einen Anschlussstückzulauf und einen Anschlussstückablauf aufweist. Der Anschlussstückzulauf und der Anschlussstückablauf sind vorzugsweise am Anschlussstück gegenüberliegend und entlang einer gemeinsamen Durchströmungsachse angeordnet und über einen Durchlaufkanal innerhalb des Anschlussstücks direkt miteinander verbunden. Zudem kann mindestens eine Anschlussvorrichtung zum Anschließen eines Funktionsmoduls bzw. zur Adaption einer Zusatzfunktion vorgesehen sein.
Zweckmäßigerweise kann innerhalb des Durchlaufkanals zwischen dem Anschlussstückzulauf und dem Anschlussstückablauf ein Absperrventil zum Sperren und/oder Regeln des Durchflusses angeordnet sein.

Darüber hinaus beansprucht die vorliegende Erfindung einen insbesondere modular aufgebauten Fluidzähler, der ein Gehäuse, einen Fluideinlass, einen Fluidauslass und ein Volumenmessteil umfasst. Zudem umfasst der Fluidzähler mindestens ein Anschlussstück, welches für den Anschluss an das Gehäuse des Fluidzählers vorgesehen ist und entweder mit einer Zusatzfunktion ausgestattet oder für die Adaption einer Zusatzfunktion am Anschlussstück hergerichtet ist. Das Anschlussstück kann einen eigenen Anschlussstückzulauf sowie Anschlussstückablauf aufweisen. Dabei bilden der Fluidzähler sowie das Anschlussstück eine modulare Einheit, welche in das Fluidleitungsnetz installierbar ist.

Vorzugsweise umfasst das Gehäuse des Fluidzählers mindestens eine Aufnahmevorrichtung, die jeweils einem Anschlussstück zugeordnet ist und z. B. dazu dient, ein Funktionsmodul aufzunehmen.

Gemäß einer bevorzugten Ausgestaltung kann das Volumenmessteil des Fluidzählers als Einschubmodul bzw. als Funktionsmodul ausgestaltet sein, welches in einfacher Weise in eine Aufnahmevorrichtung einbringbar ist, d. h. beispielsweise in diese eingeschoben oder eingesteckt wird. Dadurch kann das Volumenmessteil als werkseitig vorkonfektionierte Einheit ausgestaltet werden, die im Bedarfsfall in besonders einfacher Weise, vorzugsweise werkzeuglos, installiert oder deinstalliert werden kann.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte schematische Darstellung einer ersten Ausgestaltung der erfindungsgemäßen Anordnung;
- Fig. 2: eine vereinfachte schematische Darstellung einer weiteren Ausgestaltung der erfindungsgemäßen Anordnung;
- Fig. 3a: eine vereinfachte schematische Darstellung einer Ausgestaltung des erfindungsgemäßen Anschlussstücks;
- Fig. 3b: eine vereinfachte schematische Darstellung einer weiteren Ausgestaltung des erfindungsgemäßen Anschlussstücks;
- Fig. 3c: eine vereinfachte schematische Darstellung einer weiteren Ausgestaltung des erfindungsgemäßen Anschlussstücks;
- Fig. 3d: eine vereinfachte schematische Darstellung einer weiteren Ausgestaltung des erfindungsgemäßen Anschlussstücks;
- Fig. 4: eine vereinfachte perspektivische Darstellung einer weiteren Ausgestaltung der erfindungsgemäßen Anordnung, sowie
- Fig. 5: eine vereinfachte perspektivische Darstellung einer weiteren Ausgestaltung der erfindungsgemäßen Anordnung.

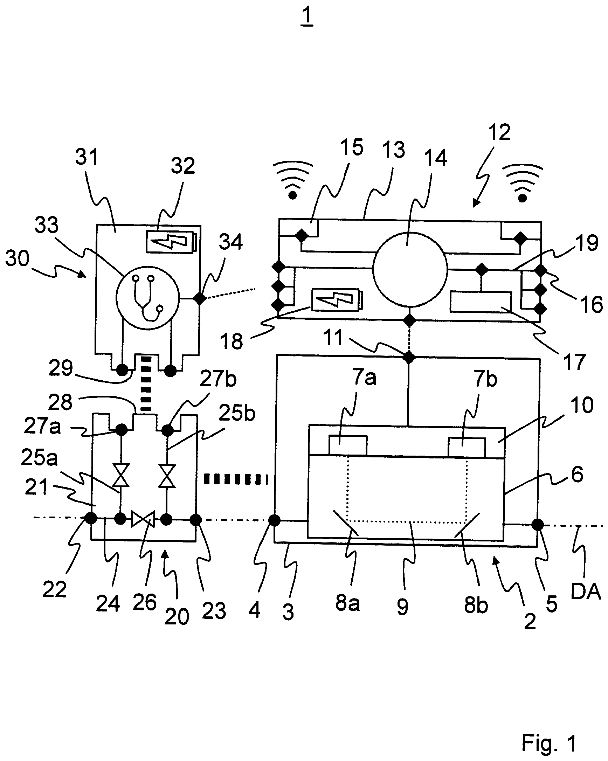

Bezugsziffer 1 in Fig. 1 bezeichnet eine erfindungsgemäße Anordnung, die einen Fluidzähler 2 und ein Anschlussstück 20 umfasst. Der Fluidzähler 2 besitzt ein Gehäuse 3 mit einem Fluideinlass 4 und einem Fluidauslass 5. Die Durchströmungsrichtung des Fluids verläuft vorzugsweise vom Fluideinlass 4 zum Fluidauslass 5 entlang einer Durchströmungsachse DA. Der Fluideinlass 4 sowie der Fluidauslass 5 sind hierbei am Gehäuse 3 gegenüberliegend entlang der Durchströmungsachse DA angeordnet. Innerhalb des Gehäuses 3 ist ein Volumenmessteil 6 angeordnet, welches eine Ultraschallmessanordnung aufweist. Alternativ könnte jedoch auch ein anderes Volumenmessteil 6, wie z. B. ein mechanisches Flügelrad-Messteil, ein magnetisch-induktives Messteil oder dergleichen vorgesehen sein.

Die Ultraschallmessanordnung umfasst zwei Ultraschallwandler 7a, 7b sowie eine zwischen den Ultraschallwandlern 7a, 7b befindliche Messstrecke 8, die aufgrund von Umlenkungen durch Reflektoren 9a, 9b U-förmig ausgebildet ist. Die Durchflussmengenbestimmung des Fluids kann hierbei z. B. anhand einer Laufzeitdifferenzmethode erfolgen. Die Steuerung des Volumenmessteils 6 bzw. der Ultraschallwandler 7a, 7b erfolgt über eine Steuereinheit 10, die dem Volumenmessteil 6 zugeordnet ist. Die Steuereinheit 10 dient ferner dazu, die Signale der Ultraschallwandler 7a, 7b in Daten umzuwandeln und diese über eine Datenschnittstelle 11 an ein Kommunikationsmodul 12 weiterzuleiten.

Das Kommunikationsmodul 12 umfasst ein Kommunikationsmodulgehäuse 13, in dem ein Prozessor 14 angeordnet ist, der die Daten des Volumenmessteils 6 verarbeiten und das Kommunikationsmodul 12 steuern kann. Das Kommunikationsmodul 12 kann die Daten des Fluidzählers bzw. die Verbrauchsdaten über eine Sende- und Empfangseinheit 15 z. B. über Funk an eine, in den Fig. nicht dargestellte, übergeordnete Schaltzentrale des Versorgers oder einen Datensammler übertragen. Alternativ oder zusätzlich kann, wie in Fig. 1 dargestellt, eine zweite Sende- und Empfangseinheit 15 vorgesehen sein, mittels der das Kommunikationsmodul 12 mit anderen Fluidzählern 2 bzw. Kommunikationsmodulen 12 kommunizieren kann. Ferner umfass das Kommunikationsmodul 12 Datenschnittstellen 16 zum Anschluss von internen Einheiten sowie externen Geräten, einen Datenspeicher 17 zum Speichern der Daten sowie einen Energiespeicher 18 zur Energieversorgung des Kommunikationsmoduls 12, wie z. B. einen Akkumulator oder eine Batterie. Alternativ kann auch ein, in den Fig. nicht dargestelltes, Netzteil mit einer Energieeinspeiseleitung vorgesehen sein, welches der Energieversorgung dient. Ferner sind innerhalb des Kommunikationsmoduls 12 Datenleitungen 19 vorgesehen, über welche der Prozessor 14, die Sende- und Empfangseinheiten 15, der Datenspeicher 17 sowie die Datenschnittstellen 16 miteinander verbunden sind.

An das Gehäuse 3 des Fluidzählers 2 kann das Anschlussstück 20 mittels einer Anschlussvorrichtung z. B. einer Steckverbindung angeschlossen werden. Die Verbindung zwischen Fluidzähler 2 und Anschlussstück 20 ist in Fig. 1 mit einer schwarzen, gestrichelten Linie dargestellt. Das Anschlussstück 20 umfasst ein Anschlussstückgehäuse 21, das z. B. aus Metall oder Kunststoff gefertigt sein kann. Ferner umfasst das Anschlussstück 20 einen Anschlussstückzulauf 22 und einen Anschlussstückablauf 23, die über einen Durchlaufkanal 24 direkt miteinander verbunden sind. Dementsprechend durchströmt das Fluid das Anschlussstück 20 ausgehend vom Anschlussstückzulauf 22 hin zum Anschlussstückablauf 23. Innerhalb des Durchlaufkanals 24 ist ein Absperrventil 26 angeordnet, welches dazu vorgesehen ist, den Durchfluss durch das Anschlussstück 20 abzusperren bzw. abzuriegeln oder freizugeben. Sobald das Anschlussstück 20 mit dem Gehäuse 3 des Fluidzählers 2 über die Anschlussvorrichtung verbunden ist, kann das Fluid das Anschlussstück 20 sowie den Fluidzähler 2 durchströmen. Das Anschlussstück 20 sowie der Fluidzähler 2 sind hierbei derart ausgestaltet, dass deren Verbindung fluiddicht ist.

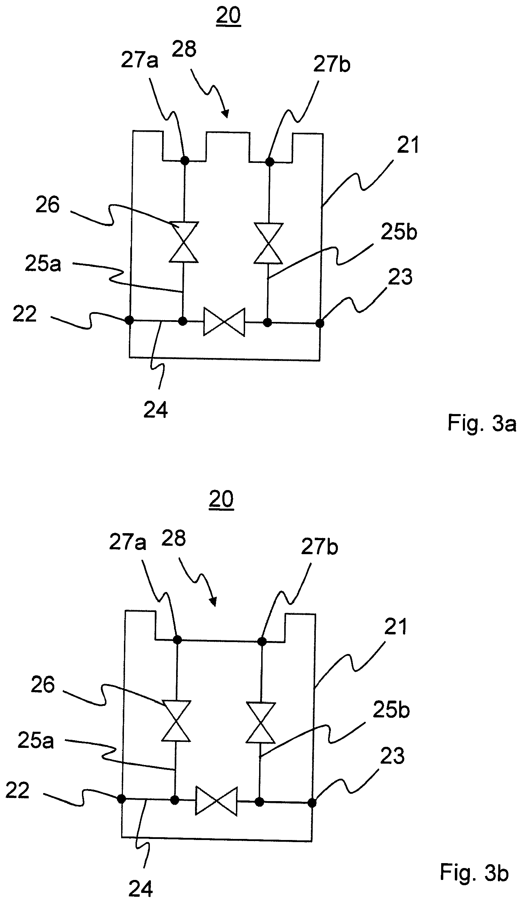

Im oberen Bereich des Anschlussstücks 20 ist eine Anschlussgeometrie bzw. eine Anschlussvorrichtung für ein Funktionsmodul 30 vorgesehen, die z. B. aus einem Steckelement 28 besteht. In bzw. an das Steckelement 28 kann ein entsprechendes Gegenstück des Funktionsmoduls 30 eingesteckt bzw. angebracht werden. Dadurch kann ein Funktionsmodul 30 an das Steckelement 28 des Anschlussstücks 20 angeschlossen werden. Die Steckelemente 28, 29 können, wie anhand des Steckelements 28 in den Fig. 3a und 3b dargestellt, unterschiedlich ausgestaltet sein. Daraus resultiert der Vorteil, dass nur ausgewählte Funktionsmodule 30 mittels eines Schlüssel-Schloss-Prinzips an das Anschlussstück 20 angeschlossen werden können, sodass ein fehlerloser Einbau bzw. Anschluss der Funktionsmodule 30 an das Anschlussstück 20 gewährleistet wird ("Poka Yoke").

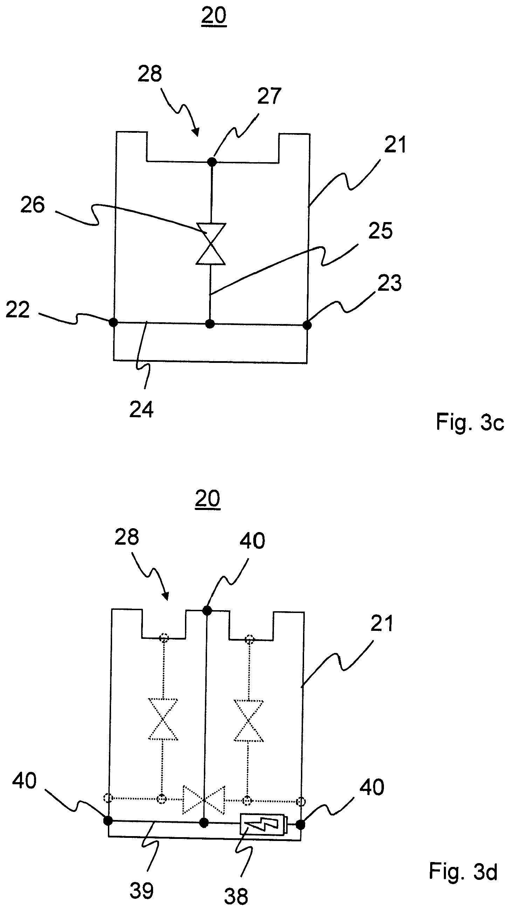

Zweckmäßigerweise kann das Anschlussstück 20 einen beispielsweise aus zwei Kanalteilen 25a, 25b bestehenden Bypasskanal oder einen, wie in Fig. 3c dargestellten, Abzweigungskanal 25 umfassen. Der Bypasskanal dient dazu, das Fluid über einen Kanalteil 25a abzuzweigen und über einen zweiten Kanalteil 25b wieder zurückzuleiten. Dadurch kann z. B. ein an Kanalschnittstellen 27a, 27b angeschlossenes Funktionsmodul 30 mit Fluid durchströmt werden. Demgegenüber dient der Abzweigungskanal 25 dazu, das Fluid vom Durchlaufkanal 24 abzuzweigen und zu einer Kanalschnittstelle 27 zu leiten, sodass dort z. B. ein Fluidkontakt ohne Durchströmung mit dem Funktionsmodul 30 ermöglicht wird. Zudem kann im Abzweigungskanal 25 oder in den Kanalteilen 25a, 25b des Bypasskanals jeweils ein Absperrventil 26 vorgesehen sein, um den abgezweigten Durchfluss hin zur Kanalschnittstelle 27 abzusperren. Vorzugsweise erfolgt das Absperren über einen automatischen Absperrmechanismus, indem der Fluidfluss durch den Durchlaufkanal gesperrt wird, sobald ein Funktionsmodul 30 angeschlossen wird und der Fluidfluss durch den Bypasskanal gesperrt wird, sobald das Funktionsmodul 30 entfernt wird. Die Detektion, ob ein Funktionsmodul 30 angeschlossen ist oder nicht, kann z. B. mittels eines Sensors oder einer Daten- und/oder Energieverbindung zwischen Anschlussstück 20 und Funktionsmodul 30 erfolgen.

Das Funktionsmodul 30 umfasst ein Funktionsmodulgehäuse 31 und eine Energieversorgung. Als Energieversorgung kann z. B. ein Energiespeicher 32, wie z. B. ein Akkumulator oder eine Batterie, oder ein in den Figuren nicht dargestelltes Netzteil sowie einem Energieeinspeisekabel vorgesehen sein. Zudem umfasst das Funktionsmodul 30 eine Funktionseinheit 33, die dazu hergerichtet ist, eine Zusatzfunktion zur Verfügung zu stellen. Somit kann durch das Anschlussstück 20 dem Fluidzähler 2 eine Zusatzfunktion hinzugefügt werden oder das Anschlussstück 20 selbst dient zur Adaption einer Zusatzfunktion. Ferner können die Funktionsmodule 30 Datenleitungen sowie Datenschnittstellen 34 umfassen, um mit anderen Funktionsmodulen 30, Anschlussstücken 20, Kommunikationsmodulen 12 oder dergleichen zu kommunizieren. Alternativ oder zusätzlich kann auch eine, nicht dargestellte, zusätzliche Kommunikationseinheit innerhalb des Funktionsmoduls 30 vorgesehen sein, um drahtlos z. B. über Bluetooth oder mittels Near Field Communication (NFC) mit anderen Komponenten der Anordnung 1 zu kommunizieren.

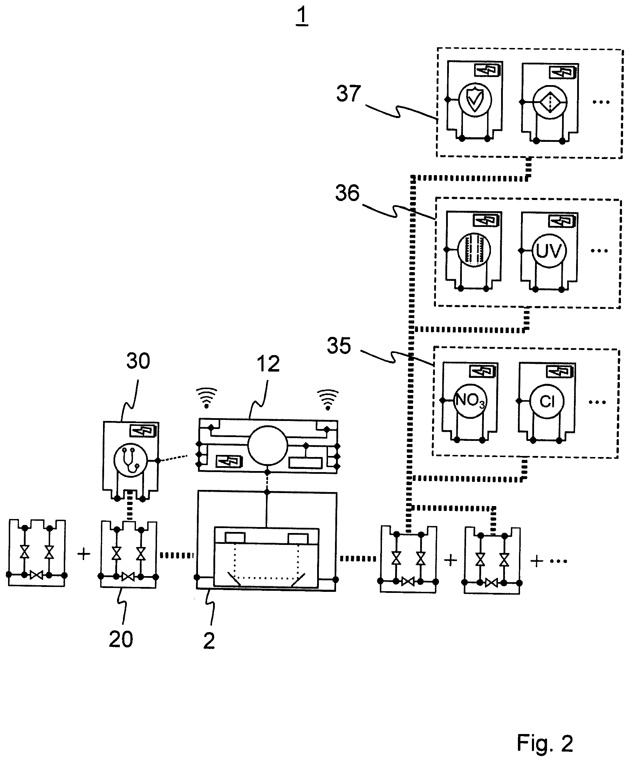

Durch die Funktionsmodule 30 können dem Fluidzähler 2 bzw. der Anordnung 1 wahlweise verschiedenste Zusatzfunktionen zugeordnet werden. Die Funktionsmodule 30 können hierbei in drei wesentliche Modulgruppen eingeteilt werden. In Fig. 2 ist ein schematischer Aufbau einer erfindungsgemäßen Anordnung 1 dargestellt, bei der unterschiedliche Funktionsmodule 30 aus der Modulgruppe Parametermessung 35, der Modulgruppe Fluidbehandlung 36 und/oder der Modulgruppe sonstige Funktionsmodule 37 wahlweise auf mehrere Anschlussstücke 20 der Anordnung 1 aufgesteckt werden können. Beispielsweise umfasst die Modulgruppe Parametermessung 35 ein Funktionsmodul 30 zur Nitratbestimmung und ein Funktionsmodul 30 zur Chlorbestimmung, womit beispielsweise der Nitrat- und/oder Chlorgehalt des Fluids ermittelt werden kann. Ferner sind als Module zur Fluidbehandlung ein Entkalker-Funktionsmodul und ein Keimreduzierungs-Funktionsmodul, welches Keime mittels einer UV-Lichtquelle abtötet bzw. die Keimzahl reduziert, vorgesehen. Darüber hinaus sind als sonstige Module ein Filter-Funktionsmodul, welches z. B. das Fluid von Schwebstoffen befreit bzw. diese herausfiltert, und ein Sicherheits-Funktionsmodul vorgesehen. Das Sicherheits-Funktionsmodul kann z. B. eine unsachgemäße Handhabung des Fluidzählers 2 oder der Anordnung 1 z. B. mittels eines Schocksensors ermitteln. Es können auch Funktionsmodule 30 vorgesehen sein, die keinen Fluidkontakt bzw. Fluiddurchfluss erfordern, wie z. B. zusätzliche Kommunikations-Funktionsmodule, welche z. B. die Sendeleistung verbessern oder zur Implementierung alternativer Funkstandards dienen. Derartige Funktionsmodule 30 besitzen entweder abdichtende Mittel, die die Kanalschnittstellen 27, 27a, 27b abschließen bzw. fluiddicht abriegeln oder sie werden auf entsprechende Anschlussstücke 20 ohne Abzweigungskanal 25 bzw. Bypasskanal angebracht bzw. gesteckt.

Die Anordnung 1 kann zudem ein Energiemanagement umfassen, welches dazu dient, dass sich die einzelnen Einheiten bzw. Module der Anordnung 1, wie z. B. Anschlussstück 20, Funktionsmodul 30, Kommunikationsmodul 12 und/oder Fluidzähler 2, untereinander mit Energie versorgen können. Beispielsweise kann ein zusätzliches gemeinsames Energie-Funktionsmodul vorgesehen sein, welches turnusmäßig oder bei Bedarf gewechselt wird, um die Energieversorgung zu gewährleisten. Hierzu können, wie anhand eines Anschlussstücks 20 in Fig. 3d gezeigt, Energieleitungen 39 innerhalb eines Moduls vorgesehen sein, die über Energieschnittstellen 40 die Energieversorgungen, z. B. einen Energiespeicher 38, der einzelnen Module miteinander verbinden. Ferner können Energiegewinnungs-Funktionsmodule vorgesehen sein, die z. B. Energie durch den Fluidfluss gewinnen und diese Energie den Energieversorgungen über Energieleitungen 39 zuführen, sodass diese die Energie nutzen und/oder speichern können. Alternativ könnten durch die Energieleitungen 39 sowie Energieschnittstellen 40 auch alle Module einer Anordnung 1 über einen einzigen Netzanschluss mit Energie versorgt werden.

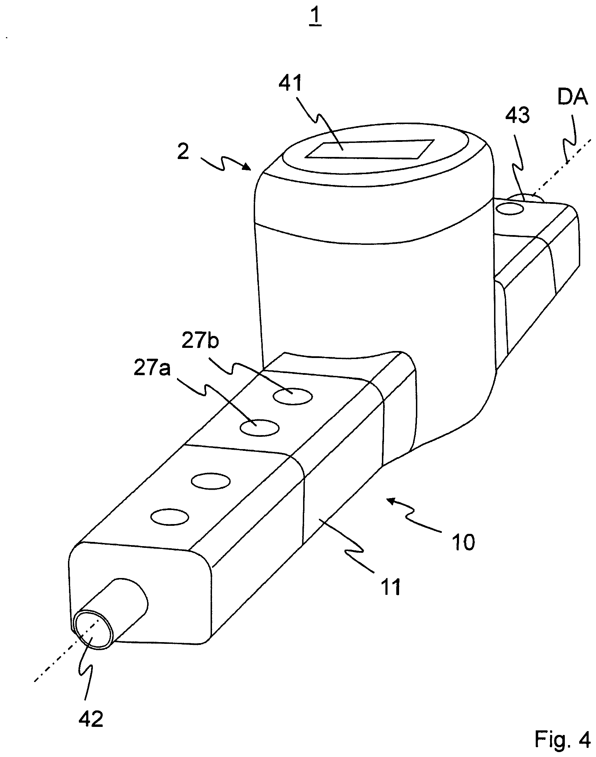

In Fig. 4 ist eine Ausgestaltung der erfindungsgemäßen Anordnung 1 perspektivisch dargestellt, bei welcher der Fluidzähler 2 sowie mehrere Anschlussstücke 20, die vor und nach dem Fluidzähler 2 angeordnet sind, eine modulare Einheit bilden. Die Anordnung umfasst den zentralen Fluidzähler zur Durchflussmengenbestimmung und vier daran angeschlossene Anschlussstücke 20. In einfacher Weise kann diese Anordnung 1 über einen gemeinsamen Fluideinlass 42 sowie einen gemeinsamen Fluidauslass 43 in ein, nicht dargestelltes, Fluidleitungsnetz installiert werden. Hierzu besitzt der gemeinsame Fluideinlass 42 sowie der gemeinsame Fluidauslass 43 eine entsprechende Verbindung, wie z. B. ein Gewinde oder eine Steckverbindung, um in eine Rohrleitung des Fluidleitungsnetzes eingesetzt zu werden. Optional können zudem auch selbsttätige oder manuelle Absperrventile in und/oder am gemeinsamen Fluideinlass 42 sowie Fluidauslass 43 vorgesehen sein.

Ferner umfassen die Anschlussstücke 20, in Fig. 4 nicht dargestellte, oberseitige Anschluss- bzw. Steckelemente. Dadurch können die Anschlussstücke 20 mit Funktionsmodulen 30 bestückt werden, die die Kanalschnittstellen 27a, 27b kontaktieren. Somit können der Anordnung 1 in einfacher Weise durch das werkseitige oder nachträgliche (d. h. nach der Installation in das Fluidleitungsnetz) Hinzufügen von Funktionsmodulen 30 Zusatzfunktionen werkzeuglos zugeordnet werden. Dadurch wird ein Baukastenkonzept realisiert, bei dem der Fluidzähler 2 als Grundbaustein dient, dem über Anschlussstücke 20 und Funktionsmodule 30 Zusatzfunktionen zugeordnet werden können.

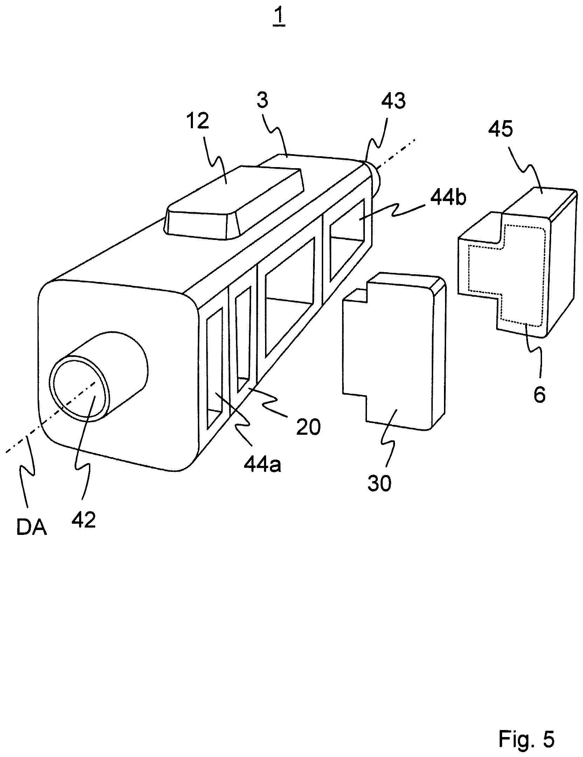

In Fig. 5 ist eine alternative Ausgestaltung der erfindungsgemäßen Anordnung 1 dargestellt. Hierbei sind mehrere Anschlussstücke 20 als integraler Bestandteil des Gehäuses 3 des Fluidzählers 2 ausgestaltet. Somit umfasst die Anordnung 1 ein gemeinsames Gehäuse 3, das den Fluidzähler 2 sowie die Anschlussstücke 20 beinhaltet. Den Anschlussstücken 20 sind hierbei Aufnahmevorrichtungen 44a, 44b zugeordnet, die dazu hergerichtet sind, jeweils ein Funktionsmodul 30 aufzunehmen. Beispielsweise können die Aufnahmevorrichtungen 44a, 44b unterschiedliche Größen für unterschiedliche Funktionsmodulgrößen aufweisen. Hierbei können kleinere Aufnahmevorrichtungen 44a dazu dienen, kleinere Funktionsmodule aufzunehmen, die z. B. lediglich zum Messen bestimmter Parameter vorgesehen sind, wie z. B. Temperatur, Druck, Nitrat, Chlor oder dergleichen. Zudem können größere Aufnahmevorrichtungen 44b vorgesehen sein, die z. B. dazu hergerichtet sind, Funktionsmodule 30 aufzunehmen, die von Fluid durchströmt sind und z. B. eine Fluid- bzw. Wasserbehandlung durchführen (Entkalkung, Enthärtung, Keimabtötung).

Die Aufnahmevorrichtungen 44a, 44b umfassen vorzugsweise darin angeordnete Daten-, Energie- und/oder Kanalschnittstellen 27, 27a, 27b, d. h. die Schnittstellen der Anschlussstücke 20, welche die Funktionsmodule 30 kontaktieren, sobald diese in die jeweilige Aufnahmevorrichtung 44a, 44b eingesteckt werden. Dabei ist die Anordnung 1 derart hergerichtet, dass das Einstecken der Funktionsmodule 30 in die jeweilige Aufnahmevorrichtung 44a, 44b selbsttätig erkannt wird, z. B. anhand einer Übertragung über die Datenschnittstelle, einer RFID-Kopplung, eines mechanischen Schalters, eines optischen Sensors oder einer anderen aus dem Stand der Technik bekannten Sensoreinheit. Dadurch kann der Absperrmechanismus der Absperrventile 26 gesteuert werden und/oder es kann eine Synchronisation der funktionalen Einheiten bzw. Module der Anordnung 1, insbesondere der Funktionsmodule 30, erfolgen. Die Anordnung 1 stellt somit eine Armatur dar, bei der ein schneller und einfacher Wechsel von Funktionsmodulen 30 mittels einer "Plug & Play"-Funktion ermöglicht wird. Ferner kann hierzu auch das Kommunikationsmodul 12 an das Gehäuse 3 angeschlossen sein, welches sich direkt mit den Funktionsmodulen 30 verbindet, sobald diese eingesteckt sind. Die Verbindung kann hierbei wahlweise drahtlos oder drahtgebunden erfolgen.

Gemäß einer Ausgestaltung nach Fig. 5 kann ein Volumenmessteil 6 vorgesehen sein, das als Einschubmodul 45 ausgebildet ist, welches somit die Funktion der Durchflussbestimmung bzw. Durchflussmengenbestimmung umfasst. Das Einschubmodul 45 kann hierbei in die Aufnahmevorrichtung 44b bzw. das Gehäuse 3 des Fluidzählers 2 eingesteckt oder eingeschoben werden. Es stellt somit ebenfalls ein Funktionsmodul 30 dar, welches bei Bedarf in einfacher Weise, vorzugsweise werkzeuglos, ausgewechselt werden kann.

Alternativ können auch die Anschlussstücke 20 und die Funktionsmodule 30 eine gemeinsame modulare Einheit bilden, die als Einschubmodul in eine Aufnahmevorrichtung 44a, 44b eingebracht werden kann. Die Aufnahmevorrichtungen 44a, 44b sind hierzu mit dem Fluideinlass 42 sowie dem Fluidauslass 43 verbunden, d. h. die Aufnahmevorrichtungen 44a, 44b werden ebenfalls von Fluid durchströmt sobald sich kein Einschubmodul in der Aufnahmevorrichtung 44a, 44b befindet. Dementsprechend kann ein zusätzliches, in den Figuren nicht dargestelltes, Platzhaltermodul vorgesehen sein, welches dazu hergerichtet ist, in eine Aufnahmevorrichtung 44a, 44b eingesteckt zu werden, um ein Nichtvorhandensein eines Funktionsmoduls 30 zu überbrücken. Vorzugsweise besitzt das Platzhaltermodul ebenfalls einen Einlass, einen Auslass und einen den Einlass und den Auslass verbindenden Durchlaufkanal sowie wahlweise eine Daten- und/oder Energieschnittstelle, um das Vorhandensein dieses Platzhaltermoduls zu detektieren.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Anordnung
- 2: Fluidzähler
- 3: Gehäuse
- 4: Fluideinlass
- 5: Fluidauslass
- 6: Volumenmessteil
- 7a, 7b: Ultraschallwandler
- 8: Messstrecke
- 9a, 9b: Reflektor
- 10: Steuereinheit
- 11: Datenschnittstelle
- 12: Kommunikationsmodul
- 13: Kommunikationsmodulgehäuse
- 14: Prozessor
- 15: Sende- und Empfangseinheit
- 16: Datenschnittstelle
- 17: Datenspeicher
- 18: Energiespeicher
- 19: Datenleitung
- 20: Anschlussstück
- 21: Anschlussstückgehäuse
- 22: Anschlussstückzulauf
- 23: Anschlussstückablauf
- 24: Durchlaufkanal
- 25: Abzweigungskanal
- 25a, 25b: Kanalteil
- 26: Absperrventil
- 27, 27a, 27b: Kanalschnittstelle
- 28: Steckelement
- 29: Steckelement
- 30: Funktionsmodul
- 31: Funktionsmodulgehäuse
- 32: Energiespeicher
- 33: Funktionseinheit
- 34: Datenschnittstelle
- 35: Modulgruppe Parametermessung
- 36: Modulgruppe Fluidbehandlung
- 37: Modulgruppe Sonstige Funktionsmodule
- 38: Energiespeicher
- 39: Energieleitung
- 40: Energieschnittstelle
- 41: Anzeige
- 42: Fluideinlass
- 43: Fluidauslass
- 44a, 44b: Aufnahmevorrichtung
- 45: Einschubmodul
- DA: Durchströmungsachse

## Patentansprüche

1. Anordnung (1) zum Einbau in ein Fluidleitungsnetz, umfassend
einen Fluidzähler (2), mit
einem Gehäuse (3) mit einem Fluideinlass (4) und einem Fluidauslass (5),
einem Volumenmessteil (6), sowie
mindestens einem Anschlussstück (20), welches für den Anschluss an das Gehäuse (3) des Fluidzählers (2) vorgesehen ist und entweder mit einer Zusatzfunktion ausgestattet ist oder für die Adaption einer Zusatzfunktion am Anschlussstück (20) hergerichtet ist,
**dadurch gekennzeichnet, dass**
das Anschlussstück (20) einen Anschlussstückzulauf (22) sowie Anschlussstückablauf (23) aufweist und der Fluidzähler (2) sowie das Anschlussstück (20) eine modulare Einheit bilden, welche in das Fluidleitungsnetz installierbar ist.

2. Anordnung (1) nach Anspruch 1, **dadurch gekennzeichnet, dass** mehrere Anschlussstücke (20) miteinander eine modulare Einheit bilden, sodass der Fluidzähler (2) sowie die mehreren Anschlussstücke (20) eine modulare Einheit bilden, welche in das Fluidleitungsnetz installierbar ist.

3. Anordnung (1) nach Anspruch 1 oder 2, **dadurch gekennzeichnet, dass** das Anschlussstück (20) mit einem Funktionsmodul (30) verbindbar ist, wobei das Funktionsmodul (30) in einem eigenen Funktionsmodulgehäuse (31) untergebracht ist.

4. Anordnung (1) nach mindestens einem der vorhergehenden Ansprüche, **dadurch gekennzeichnet, dass** eine Steckverbindung zwischen dem Fluidzähler (2) und dem Anschlussstück (20) und/oder eine Steckverbindung zwischen dem Anschlussstück (20) und dem Funktionsmodul (30) und/oder eine Steckverbindung zwischen dem Fluidzähler (2) und dem Funktionsmodul (30) vorgesehen ist.

5. Anordnung (1) nach einem der vorhergehenden Ansprüche, **dadurch gekennzeichnet, dass** die Zusatzfunktion durch das Funktionsmodul (30) festgelegt wird und es sich bei dem Funktionsmodul (30) um ein
- Entkalker-Funktionsmodul und/oder
- Filter-Funktionsmodul und/oder
- Druckminderungs-Funktionsmodul und/oder
- Überwachungs-Funktionsmodul und/oder
- Keimreduzierungs-Funktionsmodul und/oder
- Funktionsmodul zur Bestimmung chemischer und mikrobiologischer Parameter und/oder
- Funktionsmodul zur Bestimmung von pH-Wert, elektrische Leitfähigkeit, Nitrat, Nitrit, Sulfat, Kohlenstoffdioxid, Eisen, Fluorid, Chlor, Kupfer, Phosphat, Silizium, Ammonium, Härte, Temperatur, Karbonat, Salzgehalt, Keimanteil oder Metallanteil und/oder
- Energie-Funktionsmodul und/oder
- Daten-Funktionsmodul und/oder
- Kommunikations-Funktionsmodul und/oder
- Funktionsmodul zur Leckageerkennung und/oder
- Anzeige-Funktionsmodul
handelt.

6. Anordnung (1) nach einem der vorhergehenden Ansprüche, **dadurch gekennzeichnet, dass** der Fluidzähler (2), das Anschlussstück (20) und/oder das Funktionsmodul (30) mindestens ein, vorzugsweise eine Mehrzahl von Absperrventilen (26) zum Absperren und/oder Regeln des Durchflusses umfassen.

7. Anordnung (1) nach einem der vorhergehenden Ansprüche, **dadurch gekennzeichnet, dass** das Anschlussstück (20) einen zuschaltbaren Abzweigungs- (25) und/oder Bypasskanal aufweist, wobei vorzugsweise vorgesehen ist, das das Funktionsmodul (30) am Abzweigungskanal (25) und/oder Bypasskanal angeschlossen werden kann.

8. Anordnung (1) nach einem der vorhergehenden Ansprüche, **dadurch gekennzeichnet, dass** die modulare Einheit aus mehreren Anschlussstücken (20) und/oder die modulare Einheit aus den Anschlussstücken (20) sowie dem Fluidzähler (2) entlang einer gemeinsamen Achse ausgerichtet sind.

9. Anordnung (1) nach einem der vorhergehenden Ansprüche, **dadurch gekennzeichnet, dass** ein Kommunikationsmodul (12) vorgesehen ist, welches am Gehäuse (3) des Fluidzählers (2) angeordnet ist.

10. Anordnung (1) nach einem der vorhergehenden Ansprüche, **dadurch gekennzeichnet, dass** ein automatischer Absperrmechanismus anhand der Absperrventile (26) vorgesehen ist.

11. Anordnung (1) nach einem der vorhergehenden Ansprüche, **dadurch gekennzeichnet, dass** eine Datenleitung (19) sowie mindestens eine Datenschnittstelle (11, 16, 34) am Fluidzähler (2) und/oder am Anschlussstück (20) und/oder am Funktionsmodul (30) vorgesehen sind.

12. Anordnung (1) nach einem der vorhergehenden Ansprüche, **dadurch gekennzeichnet, dass** ein Energiespeicher (18, 32, 38) und/oder eine Energieleitung (39) und/oder mindestens eine Energieschnittstelle (40) am Fluidzähler (2) und/oder am Anschlussstück (20) und/oder am Funktionsmodul (30) vorgesehen sind.

13. Anordnung (1) nach einem der vorhergehenden Ansprüche, **dadurch gekennzeichnet, dass** das Anschlussstück (20) integraler Bestandteil des Gehäuses (3) des Fluidzählers (2) ist.

14. Anordnung (1) nach einem der vorhergehenden Ansprüche, **dadurch gekennzeichnet, dass** das Gehäuse (3) mindestens eine Aufnahmevorrichtung (44a, 44b) umfasst, die jeweils einem Anschlussstück (20) zugeordnet ist, wobei die Aufnahmevorrichtung (44a, 44b) dazu hergerichtet ist das Funktionsmodul (30) aufzunehmen, und wobei innerhalb der Aufnahmevorrichtung (44a, 44b) vorzugsweise eine Anschlussvorrichtung, vorzugsweise mittels einer Steckverbindung, zum Anschluss des Funktionsmoduls (30) vorgesehen ist.

15. Anordnung (1) nach einem der vorhergehenden Ansprüche, **dadurch gekennzeichnet, dass** das Volumenmessteil (6) als Einschubmodul (45) in das Gehäuse (3) des Fluidzählers (2) ausgebildet ist.

16. Anordnung (1) nach einem der vorhergehenden Ansprüche, **dadurch gekennzeichnet, dass** eine automatische Daten- und/oder Energieverbindung des Funktionsmoduls (30) mit einem anderen Funktionsmodul (30), einem Anschlussstück (20), dem Fluidzähler (2) und/oder dem Kommunikationsmodul (12), vorzugsweise über die Daten- (11, 16, 34) und/oder Energieschnittstelle (40) erfolgt, sobald das Funktionsmodul (30) an das Anschlussstück (20) angeschlossen wird.

17. Anschlussstück (20), insbesondere für eine Anordnung (1) nach einem der vorhergehenden Ansprüche, umfassend
ein Anschlussstückgehäuse (21),
einen Anschlussstückzulauf (22),
einen Anschlussstückablauf (23), wobei
der Anschlussstückzulauf (22) und der Anschlussstückablauf (23) koaxial bezüglich einer Durchströmungsachse (DA) angeordnet sind, und
mindestens eine Anschlussvorrichtung zum Anschließen eines Funktionsmoduls (30) vorgesehen ist,
**dadurch gekennzeichnet, dass**
der Anschlussstückzulauf (22) und der Anschlussstückablauf (23) über einen Durchlaufkanal (24) innerhalb des Anschlussstücks (20) direkt verbunden sind, wobei vorzugsweise vorgesehen ist, dass innerhalb des Durchlaufkanals (24) zwischen Anschlussstückzulauf (22) und Anschlussstückablauf (23) ein Absperrventil (26) angeordnet ist.

18. Fluidzähler (2), umfassend
ein Gehäuse (3),
einen Fluideinlass (4),
einem Fluidauslass (5),
ein Volumenmessteil (6), und
mindestens ein Anschlussstück (20), welches für den Anschluss an das Gehäuse (3) des Fluidzählers (2) vorgesehen ist und entweder mit einer Zusatzfunktion ausgestattet ist oder für die Adaption einer Zusatzfunktion am Anschlussstück (20) hergerichtet ist,
**dadurch gekennzeichnet, dass**
das Anschlussstück (20) einen eigenen Anschlussstückzulauf (22) sowie Anschlussstückablauf (23) aufweist, und
der Fluidzähler (2) sowie das Anschlussstück (20) eine modulare Einheit bilden, welche in das Fluidleitungsnetz installierbar ist, wobei vorzugsweise weiterhin vorgesehen ist, dass das Gehäuse (3) mindestens eine Aufnahmevorrichtung (44a, 44b) umfasst, die jeweils einem Anschlussstück (20) zugeordnet ist und/oder dass das Volumenmessteil (6) als Einschubmodul (45) ausgestaltet ist, welches in eine Aufnahmevorrichtung (44a, 44b) einbringbar ist.
